# EUROPEAN PATENT APPLICATION

(11) **EP 1 224 860 A2**
(43) Date of publication of application: **24.07.2002**
(21) Application number: 01204673.6
(22) Date of filing: 04.12.2001
(51) Int. Cl.: A01K 7/00

(54) **Drinking valve**

(30) Priority: 20.12.2000 SE 0004758
(71) Applicant: FIG Metall AB, 33591 Gnosjö (SE)
(72) Inventor: Melin, Christer, 335 91 Gnosjö (SE); Johansson, Leif, 335 93 Äsenhöga (SE)
(74) Representative: Wallengren, Yngvar

(57) **Abstract**

A drinking valve of the "bite valve" type (4) for animals comprises a valve head (1), a valve cone (9) and an actuator (3). The valve head (1) is disposed for connection to a water conduit. The actuator (3) is exteriorly accessible and is movably secured to the drinking valve. The valve cone (9) is movable between a closed position and an open position. The actuator (3) has a guide member (19) which is movably disposed in a guide (20). On displacement, the guide member (19) executes a movement at the same time as it directly or indirectly acts on the valve cone (9) between its closed and its open position.

## Description

### TECHNICAL FIELD

The present invention relates to a drinking valve of the "bite valve" type for animals, comprising a valve head with a connection to a water conduit, an openable valve cone and an externally accessible actuator which is movably secured to the drinking valve, the valve cone being displaceable reciprocally between a closed position and an open position.

### BACKGROUND ART

Numerous types of waterer valves are previously known in the art for use in animal stalls and the like. One important such type of valve is the so-called bite valve. These valves lack a receptacle for the outflowing water, such as a cup, and so the animals drink straight out of the valve. The valve is actuated, i.e. it is opened so that water can flow out, by the animal's acting on an actuator device with its mouth and teeth, the device being disposed on the valve. Actuation takes place at the same time as the drinking animal has the outlet of the valve in its mouth. When the animal releases the actuator device, the valve closes and the water flow thereby ceases. By such means, waste and drenching of the environment in which the animal is housed, for example in a box in a stall is thus avoided.

Most bite valves that are available on the market are provided with an operating rod which extends in the longitudinal direction of the valve and which is connected to a valve plate which, under spring force and water pressure, is held pressed against the seat of the valve when the valve is closed. The operating rod opens the valve when it is rocked transversely of its longitudinal direction.

In those bite valves where the operating rod is rocked, the operating rod is either actuated directly, in that it is made accessible to the animal, or via a pin which is connected to an actuator which in turn is disposed outside the bite valve.

The employment of the above-described types of bite valves is often associated with a number of drawbacks. The valves are subjected to extreme wear, not least because of the rough treatment to which they are subjected by the animals. Another problem is that water which flows out through the valve is not always of the best quality. The water often comes from a separate well and is not subjected to any purification before being fed through the valves. Such water may be hard, acidic, sandy or otherwise contaminated or aggressive.

Because of the design and construction of the bite valve, it is only possible to rock the operating rod in one direction, which entails that wear will be uneven. One section of the valve may consequently be completely worn out while other parts of the valve are as good as intact.

Thus, the bite valves wear out quickly, and depositions readily accumulate in them. Each one of these factors may impede the return of the valve to the closed position, which implies that the valve rapidly begins to leak.

A method of attempting to remedy the leakage problem is to increase the pressure of the valve cone against its valve seat by, for instance, providing a spring or alternatively replacing an existing spring with a more powerful one. However, this mode of approach entails greater wear on the valve, for which reason the above-mentioned problems rapidly recur.

There are also waterer drinking valves on the market in which the valve cone executes a linear movement. This avoids wear occurring locally on the gasket, but the prior art drinking valves utilise a lever for realising the linear movement of the operating rod. Given that the connection between the actuator and the valve cone must take place in several stages which utilise moving parts, the risk of valve failure is quite great.

### PROBLEM STRUCTURE

There is thus a need in the art to realise a valve which functions well and which is operationally reliable over the long term. Moreover, such a valve should minimise both manufacturing costs and maintenance costs.

### SOLUTION

The objects forming the basis of the present invention will be attained if the valve intimated by way of introduction is given the characterising features that the actuator has a guide member which is movably disposed in a guide in the drinking valve in order, on displacement, to execute a movement, and that the guide member is simultaneously disposed for direct or indirect action on the valve cone between its closed and its open position, or vice versa, in such a movement.

Further advantages will be attained if the drinking valve according to the present invention is moreover given one or more of the characterising features as set forth in appended Claims 2 to 11.

### BRIEF DESCRIPTION OF THE ACCOMPANYING DRAWINGS

The present invention will now be described in greater detail hereinbelow, with reference to the accompanying Drawings. In the accompanying Drawings:
- Fig. 1: is a straight side elevation, partly cut away, of a valve according to the present invention in the closed state;
- Fig. 2: is a view corresponding to that of Fig. 1 of the valve in the open state; and
- Fig. 3: is a perspective view of the partly cut away valve in the closed state.

### DESCRIPTION OF PREFERRED EMBODIMENT

In the following description, expressions such as upwards, downward and sideways will be employed. These designations agree with corresponding directions in the Figures, regardless of how it is subsequently selected to mount the valve in practical use.

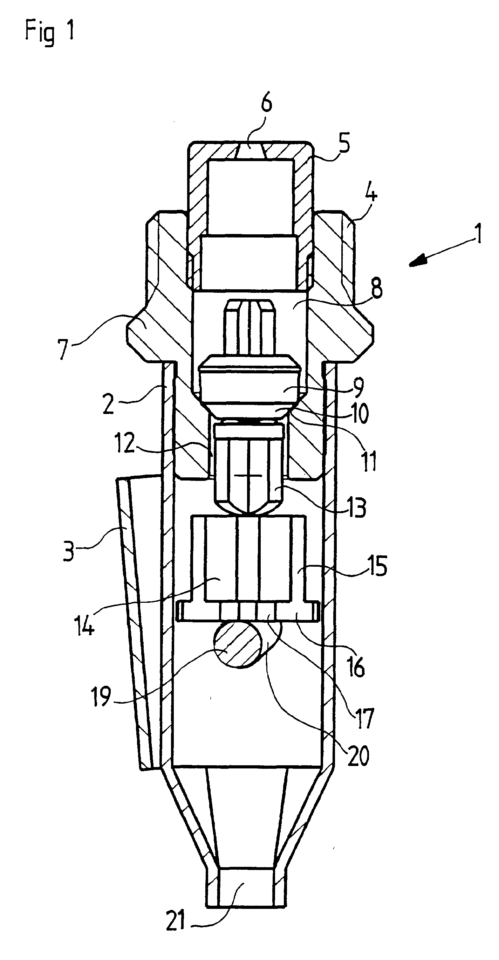

Fig. 1 shows a drinking valve of the "bite valve" type for animals, according to the present invention. The valve is here located in its closed position. The valve has three major sections: viz. a valve head 1, an outer casing 2 and an actuator 3. The valve head 1 is disposed to be connected to a water conduit and is therefore provided with threading 4. The outer casing 2 surrounds the greater part of the valve and has, in its lower end, an outlet 21. On the outside of the outer casing 2, an actuator 3 is disposed. The actuator 3 is acted on by the animals when they bite around it with their lips and/or teeth. When this happens, the actuator will in turn open the valve.

As was mentioned above, the valve head is provided with threading 4 so that it can be connected to a water conduit. In the upper region of the valve head, there is also disposed a throttle 5 for restricting the water flow. The aperture 6 of the throttle 5 may be of different sizes, depending upon the flow which is desired and the pressure which prevails in the water conduit. The desirable flow is in its turn determined by what species of animal it is intended will use the valve.

Immediately below the throttle 5, a filter (not shown) is disposed which preferably consists of a grid or fine mesh net. The filter prevents coarse foreign matter from entering into the interior of the valve and causing damage there.

Below the filter, a spring (not shown) is disposed. The spring biases the valve towards its closed position.

A valve housing 7 is disposed in the lower end of the valve head 1. In the valve housing, there is a cavity 8 in which a valve cone 9 is disposed. The valve cone 9 has a valve plate 10 which is provided with a gasket where it is intended to abut against the valve seat 11.

The gasket is relatively soft and seals tightly. The use of such a gasket is possible from the point of view of wear, since the gasket and the valve plate 10 together execute a linear movement in relation to the valve seat 11. The abutment surface of the gasket against the valve seat is relatively large and uniformly distributed throughout the entire gasket. In principle, no point loading occurs.

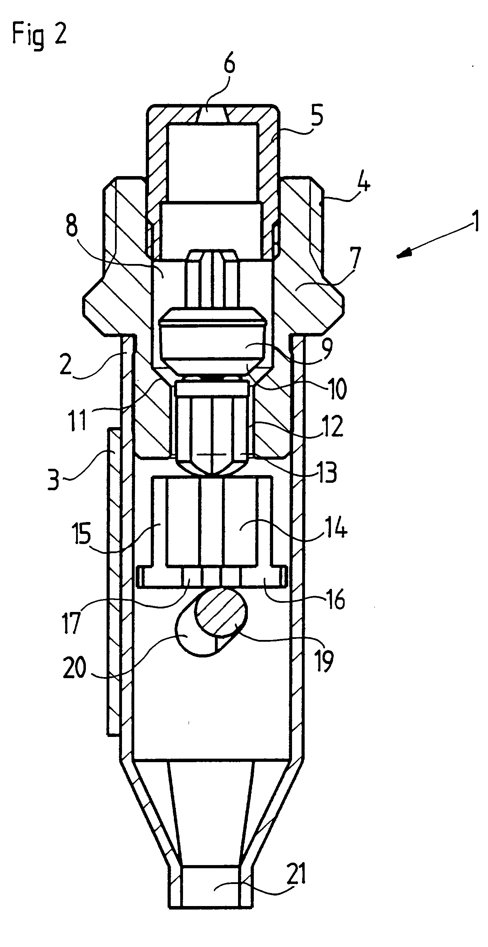

Below the valve seat 11, there is provided in the vale housing a channel 12 through which a spindle 13 extends. There is a certain clearance between the walls of the channel 12 and the outer contour of the spindle 13 so that water may flow therebetween when the valve cone is located in its open position, which is shown in Fig. 2.

Below the valve housing 7 and partly surrounding it, there is disposed the outer casing 2. In the preferred embodiment, the outer casing 2 is elongate and substantially tubular. Preferably, the tube has the outer contour of a cylinder. As was previously mentioned, the valve housing 7 extends a distance into the upper region of the outer casing 2.

A distributor member 14 is disposed below the spindle 13 and in contact with it (inside the outer casing 2). When water flows through the valve, it meets the distributor member 14 which is operative to split up the water jet and lead it outwards towards the inner walls of the outer casing 2. The water jet is thereby broken up and the water becomes more comfortable for the animals to drink. The distributor member 14 is, to this end, provided with upright vanes 15 on a lower plate 16. The plate 16 has an outer contour which largely corresponds to the inner contour of the outer casing 2. However, there is a certain clearance between the outer contour of the distributor member 14 and the inner walls of the outer casing 2, so that water can flow between them.

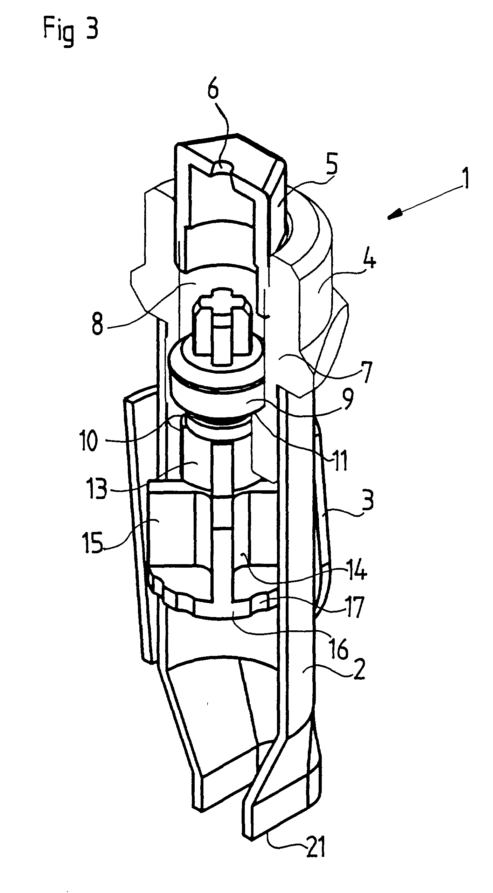

The edge 18 of the plate 16 is moreover provided with a number of recesses 17. The recesses 17 facilitate the flow of the water and possibly aerate the water. The distributor member 14 and its parts are clearly apparent from Fig. 3.

As was mentioned above, the distributor member 14 abuts against the spindle 13 which in turn executes linear movements to the valve cone 9. In order to realise linear movements in the longitudinal direction of the valve, the distributor member 14 must thus be acted on.

In order to move from the closed position illustrated in Fig. 1 to the open position illustrated in Fig. 2, a guide member 19 must act on the distributor member 14 with an upwardly directed movement. The movement of the guide member 19 is realised with the aid of the actuator 3.

In the preferred embodiment, the actuator 3 is disposed outside the outer casing 2 and wholly or partly surrounds it. The actuator 3 is secured to the outer casing 2 with the aid of the guide member 19 which, in the preferred embodiment, is a pin extending at least a distance into the outer casing 2 for retention of the actuator 3 there. The guide member or pin 19 is disposed to be movable in a guide 20 which, in the preferred embodiment, consists of a slot in the outer casing 2. On actuation of the actuator 3 transversely of the longitudinal direction of the valve, i.e. when the animal bites around the valve and the actuator 3, the guide member 19 will move in the slot or guide 20.

At the same time as the guide member 19 movably interconnects the actuator 3 with the outer casing 2, it also abuts against the distributor member 14. In the preferred embodiment, the guide member or pin 19 abuts against the underside of the plate 16 of the distributor member 14. This is particularly advantageous if the pin 19 is through-going so that the abutment against the underside of the plate 16 is linear. If the pin 19 is moved upwards, regardless of being simultaneously moved sideways, the distributor member 14 is also forced upwards. In such instance, the pin 19 may execute a sliding movement along the plate 16. When the pin 19 is no longer affected by any force from the actuator, the distributor member 14 will return the pin 19 to the original position in Fig. 1 with the aid of the water pressure and the spring disposed in the valve.

The guide or slot 20 has a longitudinal direction which makes an angle with the direction of movement of the valve cone 9 which, in the illustrated embodiment, corresponds to the longitudinal direction of the valve. This implies that the movement of the guide member 19 in the guide 20 on each occasion is divided into two composants, preferably one composant which is parallel with or even coinciding with the direction of movement of the valve cone 9, and one which is at right angles thereto. The movement composant which is parallel with the direction of movement of the valve cone 9 may, in the preferred embodiment, also be called longitudinal, while the second movement composant may be called transverse. When the guide member 19 moves in the guide 20, only the longitudinal movement composant is utilised for acting on the valve cone 9 via the distributor member 14.

A major advantage in the present invention is that, regardless of how the force is applied on the actuator 3, i.e. regardless of how the animal bites, the guide member will be given an upwardly directed movement composant. Consequently, the valve will be more operationally reliable and less sensitive to rough treatment.

By angling the guide 20 in different manners in relation to the longitudinal axis of the valve in the construction, it is possible to influence how much of its movement is used for opening and closing the valve. There will thereby be realised a ratio in relation to the force which must be overcome in the opening of the valve, i.e. the spring force and the water pressure, and the force which must be applied by the animal on actuator 3.

### DESCRIPTION OF ALTERNATIVE EMBODIMENTS

In the above-described preferred embodiment, the slot is straight and makes an angle with the longitudinal direction of the valve cone 9. One alternative is to cause the guide or slot 20 to be curved. The guide member 19 then executes a curved movement when the actuator 3 is pressed against the outer casing 2. In each instant of this movement, the composant of the movement can be divided up and its longitudinal composant thereby varies. The ratio between the force applied on the actuator 3 and the force with which the guide member 19 acts on the distributor member which in turn opens the valve cone 9 will thus vary during the movement. Since the force which is required for overcoming the force of the water pressure and the force of the spring is greatest in the initial phase of the opening of the valve, the ratio and thereby the local angle of the slot should be adapted to this in order that the force by which the actuator 3 is to be acted on is reasonable for the animal.

The reason why the force which is required is greatest in the initial phase is that the whole water pressure loads the valve and counteracts its opening when it is closed. In addition, there is the force from the spring, if any. When the valve has once begun to be opened and water flows past the valve plate 11, the pressure from the water falls and it is then considerably easier to open the valve a further distance.

Another method of utilising the configuration and angling of the slot is to adapt it to different suction and drinking behaviour patterns in different breeds of animal. It is quite simple to imagine that the behaviour of a piglet is different from the behaviour of a fully-grown bull. There may therefore be a need for several different variations of the drinking valve according to the present invention.

The present invention may be modified further without departing from the scope of the appended Claims.

## Claims

1. A drinking valve of the "bite valve" type for animals, comprising a valve head (1) with a connection to a water conduit, an openable valve cone (9) and an externally accessible actuator (3) which is movably secured to the drinking valve, the valve cone (9) being displaceable reciprocally between a closed position and an open position, **characterised in that** the actuator (3) has a guide member (19) which is movably disposed in a guide (20) in the drinking valve in order, on displacement, to execute a movement, and that the guide member (19) is simultaneously disposed for direct or indirect action on the valve cone (9) between its closed and its open position, or vice versa, in such a movement.

2. The drinking valve as claimed in Claim 1, **characterised in that** the movement of the guide member (19) in the guide (20) is divisible into composants; and that the guide member (19) is disposed to utilise one movement composant which is parallel with the movement of the valve cone (9), between the open and the closed position, for actuating the valve cone (9).

3. The drinking valve as claimed in Claim 1 or 2, **characterised in that** the guide member (19) abuts against a distributor member (14) which in turn acts on the valve cone (9) on movement.

4. The drinking valve as claimed in any of Claims 1 to 3, **characterised in that** the valve has an outer casing (2) in which the guide member (19) and the guide (20) are disposed.

5. The drinking valve as claimed in Claim 4, **characterised in that** the guide (20) is disposed in the outer casing (2) in the form of a slot in which the guide member (19) is movable.

6. The drinking valve as claimed in Claim 5, **characterised in that** the slot (20), at least partly, makes an angle with the direction of movement of the valve cone (9).

7. The drinking valve as claimed in Claim 5 or 6, **characterised in that** the slot (20) is straight.

8. The drinking valve as claimed in Claim 5 or 6, **characterised in that** the slot (20) is curved.

9. The drinking valve as claimed in any of Claims 4 to 8, **characterised in that** the guide member (19) is a pin which extends substantially transversely through the outer casing (2).

10. The drinking valve as claimed in Claim 5, **characterised in that** the guide member (19) has a substantially linear abutment against the distributor member (14) on each occasion.

11. The drinking valve as claimed in Claim 3 or 10, **characterised in that** the distributor member (14) has a number of vanes (15) for breaking up an incoming water jet.
